(19) Europäisches Patentamt / European Patent Office / Office européen des brevets

(11) **EP 4 230 980 B1**

(12) **FASCICULE DE BREVET EUROPEEN**

(45) Date de publication et mention
de la délivrance du brevet:
**14.02.2024 Bulletin 2024/07**

(21) Numéro de dépôt: **23156417.0**

(22) Date de dépôt: **13.02.2023**

(51) Classification Internationale des Brevets (IPC):
**G01K 7/01** *(2006.01)*    **G01K 7/42** *(2006.01)*
**E06B 9/68** *(2006.01)*    **H02S 40/40** *(2014.01)*
**E06B 9/24** *(2006.01)*    **E06B 9/11** *(2006.01)*

(52) Classification Coopérative des Brevets (CPC):
**G01K 7/427; E06B 9/68; G01K 7/01;** E06B 9/11;
E06B 2009/2476; E06B 2009/6809;
E06B 2009/6827; G01K 2217/00

(54) **PROCÉDÉ DE DÉTERMINATION DE LA TEMPÉRATURE AMBIANTE EXTÉRIEURE DANS UN SYSTÈME COMPORTANT UN MODULE PHOTOVOLTAÏQUE ET SYSTÈME CORRESPONDANT**

VERFAHREN ZUR ERMITTLUNG DER EXTERNEN UMGEBUNGSTEMPERATUR IN EINEM EIN PHOTOVOLTAISCHES MODUL UMFASSENDEN SYSTEM UND KORRESPONDIERENDES SYSTEM

METHOD FOR DETERMINING THE EXTERNAL AMBIENT TEMPERATURE IN A SYSTEM COMPRISING A PHOTOVOLTAIC MODULE AND CORRESPONDING SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.02.2022 FR 2201446**

(43) Date de publication de la demande:
**23.08.2023 Bulletin 2023/34**

(73) Titulaires:
• **Commissariat à l'énergie atomique et aux énergies alternatives**
**75015 Paris (FR)**
• **BHG**
**68220 Attenschwiller (FR)**

(72) Inventeurs:
• **CHAINTREUIL, Nicolas**
**38054 GRENOBLE CEDEX 09 (FR)**
• **LESPINATS, Sylvain**
**38054 GRENOBLE CEDEX 09 (FR)**

(74) Mandataire: **Cabinet Beaumont**
**4, Place Robert Schuman**
**B.P. 1529**
**38025 Grenoble Cedex 1 (FR)**

(56) Documents cités:
DE-A1-102013 219 494    FR-A1- 2 966 942
FR-A1- 2 966 943    FR-A1- 3 060 634

**Description**

Domaine technique

La présente description concerne de façon générale les systèmes intégrant des modules photovoltaïques, et vise plus particulièrement un procédé et un système de mesure de température au moyen d'un module photovoltaïque.

Technique antérieure

De nombreux systèmes comprenant un ou plusieurs modules photovoltaïques configurés pour alimenter une charge, par exemple une batterie électrique, ont été proposés. Référence est faite à ce propos aux demandes de brevet DE102013219494 A1, FR2966943 A1, FR2966942 A1, FR3060634 A1.

Dans de nombreuses situations, il peut être souhaitable de mesurer une température au sein du système, par exemple en vue de commander en conséquence un élément du système.

Pour ce faire, on prévoit de façon classique une sonde de température dédiée à cette mesure.

L'intégration d'une telle sonde au sein du système peut toutefois poser des difficultés.

Résumé de l'invention

Un mode de réalisation prévoit un procédé de détermination de la température ambiante extérieure $T_a$ dans un système comportant un module photovoltaïque, comprenant les étapes suivantes :

a) mesurer le courant de court-circuit $I_{sc}$ et la tension de circuit ouvert $V_{oc}$ du module photovoltaïque ;

b) calculer la température ambiante extérieure $T_a$, au moyen d'un dispositif électronique de traitement, en fonction de la valeur du courant de court-circuit $I_{sc}$ et de la valeur de la tension de circuit ouvert $V_{oc}$ mesurées à l'étape a), au moyen d'un modèle mathématique polynomial unique à deux variables d'entrée.

Selon un mode de réalisation, le modèle polynomial utilisé à l'étape b) par le dispositif électronique de traitement est un modèle d'ordre supérieur ou égal à 1 comprenant des coefficients fixes déterminés lors d'une phase préalable de calibration et stockés dans une mémoire du dispositif électronique de traitement.

Selon un mode de réalisation, le modèle polynomial utilisé à l'étape b) par le dispositif électronique de traitement est un modèle multilinéaire d'ordre 1 défini par la relation suivante :

[Math 9]

$$T_a(I_{sc}, V_{oc}) = a \times I_{sc} + b \times V_{oc} + c,$$

où a, b et c sont les coefficients fixes du modèle, déterminés lors de la phase préalable de calibration et stockés dans ladite mémoire du dispositif électronique de traitement.

Selon un mode de réalisation, le modèle polynomial utilisé à l'étape b) par le dispositif électronique de traitement est un modèle d'ordre 2 défini par la relation suivante :

[Math 10]

$$T_a(I_{sc}, V_{oc}) = a \times I_{sc}^2 + b \times V_{oc}^2 + c \times I_{sc} \times V_{oc} + d \times I_{sc} + e \times V_{oc} + f,$$

où a, b, c, d, e et f sont les coefficients fixes du modèle, déterminés lors de la phase préalable de calibration et stockés dans ladite mémoire du dispositif électronique de traitement.

Selon un mode de réalisation, le modèle polynomial utilisé à l'étape b) par le dispositif électronique de traitement est un modèle d'ordre n supérieur à 2, défini par la relation suivante :

[Math 11]

$$T_a(I_{sc}, V_{oc}) = \sum_{i=0}^{n} \sum_{j=0}^{n} a_{i,j} \times I_{sc}{}^{i} \times V_{oc}{}^{j},$$

où i et j sont des entiers allant de 1 à n et les valeurs $a_{i,j}$ sont les coefficients fixes du modèle, déterminés lors de la phase préalable de calibration et stockés dans ladite mémoire du dispositif électronique de traitement.

Selon un mode de réalisation, à l'étape a), la valeur du courant de court-circuit $I_{sc}$ du module photovoltaïque est déterminée par mesure d'une tension aux bornes d'une résistance de shunt connectée aux bornes du module photovoltaïque.

Selon un mode de réalisation, la valeur de la résistance de shunt est telle que la tension aux bornes de la résistance de shunt lors de la mesure du courant de court-circuit $I_{sc}$ du module photovoltaïque est inférieure à 5 % de la tension de circuit ouvert $V_{oc}$ du module photovoltaïque.

Selon un mode de réalisation, le procédé comporte en outre une étape de commande d'un élément commandable électriquement du système en tenant compte de la valeur de la température ambiante $T_a$ calculée à l'étape b).

Un autre mode de réalisation prévoit un système comprenant un module photovoltaïque et un dispositif électronique de traitement configuré pour mettre en oeuvre un procédé tel que défini ci-dessus.

Selon un mode de réalisation, le système comprend un dispositif d'occultation motorisé alimenté par le module photovoltaïque.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en perspective illustrant de façon schématique un exemple d'un système intégrant un module photovoltaïque ;

la figure 2 représente de façon schématique, sous forme de blocs, un exemple d'un système de mesure de température selon un mode de réalisation ; et

la figure 3 représente de façon schématique, sous forme de blocs, un exemple d'un procédé de mesure de température selon un mode de réalisation.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits de contrôle et de traitement adaptés à mettre en oeuvre les procédés décrits n'ont pas été détaillés, la réalisation de tels circuits étant à la portée de la personne du métier à partir des indications de la présente description. En outre, la réalisation des modules photovoltaïques des systèmes décrits n'a pas été détaillée, les modes de réalisation étant compatibles avec tous ou la plupart des modules photovoltaïques connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un dispositif dans une position normale d'utilisation.

Sauf précision contraire, les expressions "environ", "approximativement", "sensiblement", et "de l'ordre de" signifient à 10 % près, de préférence à 5 % près.

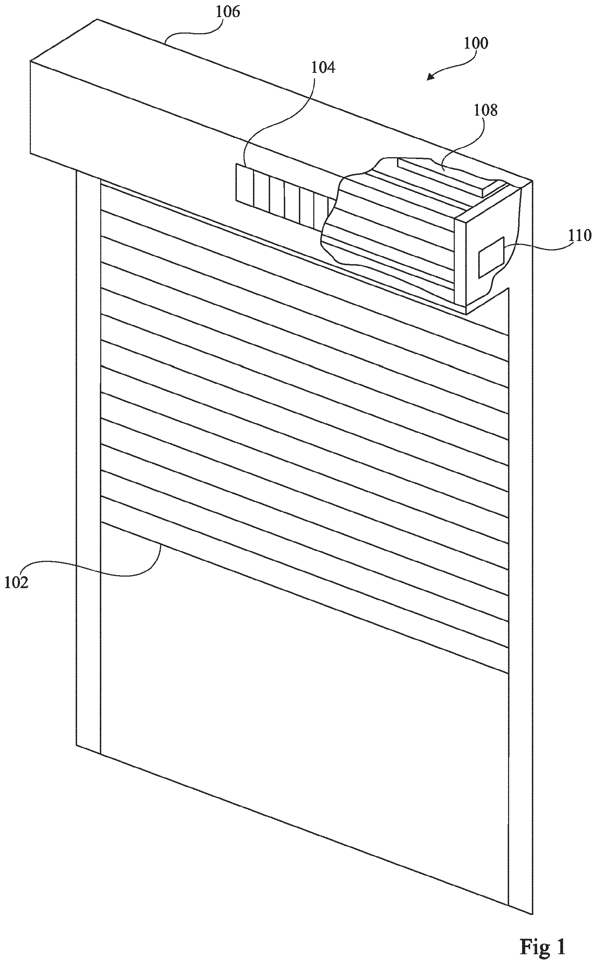

La figure 1 est une vue en perspective illustrant de façon schématique un exemple d'un système 100 intégrant un module photovoltaïque.

Dans cet exemple, le système 100 est un dispositif d'occultation motorisé de type volet roulant.

Le dispositif 100 comporte un tablier 102 constitué par un assemblage de plusieurs lames, et comporte en outre un arbre motorisé (non visible sur la figure 1) sur lequel peut être enroulé le tablier 102 et à partir duquel peut être déroulé le tablier 102.

Le dispositif 100 comporte en outre un générateur photovoltaïque ou module photovoltaïque 104, comportant un ou plusieurs panneaux photovoltaïques. A titre d'exemple, le dispositif 100 comporte un caisson 106 dans lequel est disposé l'arbre motorisé. Le ou les panneaux photovoltaïques du module photovoltaïque 104 sont par exemple disposés sur le caisson 106.

Le dispositif 100 comporte de plus une batterie électrique 108 alimentée en énergie électrique par le module photovoltaïque 104 et alimentant en énergie électrique le dispositif 100, et en particulier le moteur d'entraînement (non visible sur la figure 1) de l'arbre d'enroulement du tablier 102. A titre d'exemple, la batterie 108 est disposée dans le caisson 106.

Le dispositif 100 comporte en outre un dispositif électronique de contrôle 110, permettant notamment de commander le moteur du dispositif. A titre d'exemple, le dispositif de contrôle 110 est disposé à l'intérieur du caisson 106.

Le dispositif électronique de contrôle 110 peut comprendre divers capteurs, ainsi qu'un circuit électronique de traitement des données mesurées par les capteurs. A titre d'exemple, le circuit électronique de traitement comprend une unité de traitement de type microcontrôleur, et peut en outre comprendre un ou plusieurs circuits mémoire.

Le dispositif d'occultation 100 est destiné à être monté devant une ouverture (non visible sur la figure 1) d'un bâtiment, apte à laisser passer la lumière, par exemple devant une fenêtre équipée d'une vitre transparente.

Dans cet exemple, le dispositif électronique de contrôle 110 est configuré pour mettre en oeuvre un procédé de commande automatique dit intelligent du dispositif d'occultation, tenant compte notamment de l'irradiation solaire et de la température extérieure. Un tel procédé permet de gérer les apports solaires dans le bâtiment, par exemple en privilégiant l'ouverture des volets exposés au soleil lorsque les températures extérieures sont basses, et/ou en fermant les volets exposés au soleil lorsque les températures extérieures sont élevées.

L'irradiation solaire peut être estimée par le dispositif électronique de contrôle 110 en mesurant le courant de court-circuit du module photovoltaïque 104.

La température extérieure peut quant à elle être mesurée au moyen d'une sonde de température. La prévision d'une telle sonde induit toutefois un coût supplémentaire. De plus, l'intégration d'une telle sonde dans le dispositif 100 peut présenter des difficultés.

Selon un aspect d'un mode de réalisation, on prévoit d'utiliser le module photovoltaïque 104 pour estimer la température.

Pour cela, le dispositif de contrôle 110 est configuré pour, lors d'une phase de mesure de température, mesurer la tension en circuit ouvert $V_{oc}$ du module photovoltaïque 104, mesurer le courant de court-circuit $I_{sc}$ du module photovoltaïque 104, puis calculer une valeur $T_a$ représentative de la température ambiante au voisinage du module photovoltaïque 104, en fonction de la valeur de la tension en circuit ouvert $V_{oc}$ et de la valeur du courant de court-circuit Ise.

Par température ambiante, on entend ici la température de l'air ambiant extérieur, c'est-à-dire de l'air à l'extérieur du module, au voisinage du module, par exemple à une distance de 1 à 30 cm du module, par exemple à une distance de 1 à 10 cm du module.

En pratique les inventeurs ont déterminé que quelle que soit la valeur de l'irradiation solaire, pour autant que cette dernière soit non négligeable, par exemple supérieure ou égale à 10 W/m$^2$, de préférence supérieure ou égale à 50 W/m$^2$, et plus préférentiellement encore supérieure ou égale à 100 W/m$^2$, il existe, pour chaque valeur d'irradiation solaire, une relation sensiblement linéaire entre la température T du module photovoltaïque 104 et sa tension de circuit ouvert $V_{oc}$, de la forme :

[Math 1]

$$T = a \times V_{oc} + b$$

où a et b sont des coefficients variant en fonction de l'irradiation solaire $I_{rr}$.

L'irradiation solaire $I_{rr}$ peut elle-même être déterminée en mesurant le courant de court-circuit $I_{sc}$ du module photovoltaïque. En effet, pour un module photovoltaïque donné, le courant de court-circuit $I_{sc}$ du module varie linéairement en fonction de l'irradiation solaire $I_{rr}$.

Les inventeurs ont déterminé que le coefficient directeur a de l'équation Math 1 ci-dessus peut être approximé à partir du courant de court-circuit $I_{sc}$ du module par une relation polynomiale d'ordre supérieur ou égal à 1, par exemple par la relation polynomiale d'ordre 2 suivante :

[Math 2]

$$a = a_{cd} \times I_{sc}{}^2 - b_{cd} \times I_{sc} - c_{cd}$$

où $a_{cd}$, $b_{cd}$ et $c_{cd}$ sont des coefficients fixes dépendant uniquement des caractéristiques du module photovoltaïque 104.

De façon similaire, l'ordonnée à l'origine b de l'équation Math 1 ci-dessus peut être approximée à partir du courant de court-circuit $I_{sc}$ du module par une relation polynomiale d'ordre supérieur ou égal à 1, par exemple par la relation polynomiale d'ordre 2 suivante :

[Math 3]

$$b = a_{oo} \times I_{sc}{}^2 - b_{oo} \times I_{sc} - c_{oo}$$

où $a_{oo}$, $b_{oo}$ et $c_{oo}$ sont des coefficients fixes dépendant uniquement des caractéristiques du module photovoltaïque 104.

Ainsi, la température estimée T du module photovoltaïque 104 peut être approximée, par exemple, par la relation suivante :

[Math 4]

$$T = \left(a_{cd} \times I_{sc}{}^2 - b_{cd} \times I_{sc} - c_{cd}\right) \times V_{oc} + \left(a_{oo} \times I_{sc}{}^2 - b_{oo} \times I_{sc} - c_{oo}\right)$$

Par ailleurs, la température T du module photovoltaïque varie en fonction de la température ambiante extérieure $T_a$ et du courant de court-circuit $I_{sc}$ du module (lui-même représentatif de l'irradiation solaire).

Plus particulièrement, pour une température donnée T quelconque du module photovoltaïque, la relation entre la température ambiante $T_a$ et le courant de court-circuit $I_{sc}$ du module est sensiblement linéaire.

Ainsi, la température ambiante extérieure $T_a$ peut être approximée par la relation suivante :

[Math 5]

$$T_a = A \times I_{sc} + B$$

où A et B sont des coefficients variant en fonction de la température T du module photovoltaïque.

Les inventeurs ont déterminé que le coefficient directeur A de l'équation Math 5 ci-dessus peut être approximé à partir de la température T du module photovoltaïque par une relation polynomiale d'ordre supérieur ou égal à 1, par exemple par la relation polynomiale d'ordre 2 suivante :

[Math 6]

$$A = A_{cd} \times T^2 - B_{cd} \times T - C_{cd}$$

où $A_{cd}$, $B_{cd}$ et $B_{cd}$ sont des coefficients fixes dépendant uniquement des caractéristiques du module photovoltaïque 104 et de son intégration dans le système considéré (notamment de son couplage thermique avec d'autres éléments du système).

De façon similaire, l'ordonnée à l'origine B de l'équation Math 5 ci-dessus peut être approximée à partir du courant de court-circuit $I_{sc}$ du module par une relation polynomiale d'ordre supérieur ou égal à 1, par exemple par la relation polynomiale d'ordre 2 suivante :

[Math 7]

$$B = A_{oo} \times T^2 - B_{oo} \times T - C_{oo}$$

où $A_{oo}$, $B_{oo}$ et $B_{oo}$ sont des coefficients fixes dépendant uniquement des caractéristiques du module photovoltaïque 104 et de son intégration dans le système considéré.

Ainsi, la température ambiante $T_a$ au voisinage du module photovoltaïque 104 peut être approximée, par exemple, par la relation suivante :

[Math 8]

$$T_a = (A_{cd} \times \mathrm{T}^2 - B_{cd} \times T - C_{cd}) \times I_{sc} + (A_{oo} \times \mathrm{T}^2 - B_{oo} \times \mathrm{T} - C_{oo})$$

Il est ainsi possible, à partir d'une mesure de la tension de circuit ouvert $V_{oc}$ et du courant de court-circuit $I_{sc}$ du module, au moyen d'un premier modèle mathématique défini par exemple par l'équation Math 4 ci-dessus, d'estimer la température T du module photovoltaïque 104, puis, à partir de la température T estimée au moyen du premier modèle et de la mesure du courant $I_{sc}$, au moyen d'un deuxième modèle mathématique défini par exemple par l'équation Math 8 ci-dessus, d'estimer la température ambiante $T_a$ au voisinage du module.

Toutefois, un inconvénient de cette approche est que les erreurs introduites par les deux modèles d'approximation successifs sont combinées, ce qui limite la précision de l'estimation de la température ambiante $T_a$.

Selon un aspect d'un mode de réalisation, on prévoit d'estimer la température ambiante $T_a$ au voisinage du module directement à partir d'une mesure de la tension de circuit ouvert $V_{oc}$ et du courant de court-circuit $I_{sc}$ du module, en utilisant pour cela un modèle mathématique polynomial unique à deux variables d'entrée $V_{oc}$ et $I_{sc}$. Ceci permet de s'affranchir de l'étape intermédiaire de calcul de la température T du module. Ceci permet en outre de minimiser l'erreur d'approximation liée à l'imprécision du modèle dans l'estimation de la température ambiante $T_a$.

A titre d'exemple, le modèle est un modèle multilinéaire (polynomial d'ordre 1), défini par la relation suivante :

[Math 9]

$$T_a(I_{sc}, V_{oc}) = a \times I_{sc} + b \times V_{oc} + c$$

où a, b et c sont des coefficients fixes dépendant uniquement des caractéristiques du module photovoltaïque 104 et de son intégration dans le système considéré (notamment de son couplage thermique avec d'autres éléments du système).

A titre de variante, le modèle est un modèle polynomial d'ordre 2, défini par la relation suivante :

[Math 10]

$$T_a(I_{sc}, V_{oc}) = a \times I_{sc}{}^2 + b \times V_{oc}{}^2 + c \times I_{sc} \times V_{oc} + d \times I_{sc} + e \times V_{oc} + f$$

où a, b, c, d, e et f sont des coefficients fixes dépendant uniquement des caractéristiques du module photovoltaïque 104 et de son intégration dans le système considéré (notamment de son couplage thermique avec d'autres éléments du système).

A titre de variante, le modèle $T_a(I_{sc}, V_{oc})$ est un modèle polynomial d'ordre n, avec n entier supérieur à 2, défini par la relation suivante :

[Math 11]

$$T_a(I_{sc}, V_{oc}) = \sum_{i=0}^{n} \sum_{j=0}^{n} a_{i,j} \times I_{sc}{}^i \times V_{oc}{}^j$$

où i et j sont des entiers allant de 0 à n et les valeurs $a_{i,j}$ sont des coefficients fixes dépendant uniquement des caractéristiques du module photovoltaïque 104 et de son intégration dans le système considéré (notamment de son couplage thermique avec d'autres éléments du système).

La température ambiante estimée $T_a$ au voisinage du module photovoltaïque 104 peut être calculée par le dispositif de contrôle 110 au moyen du modèle multilinéaire $T_a(I_{sc}, V_{oc})$.

La tension $V_{oc}$ et le courant $I_{sc}$ peuvent être mesurés respectivement par un capteur de tension et par un capteur de courant du dispositif électronique de contrôle 110. Le dispositif de contrôle 110 peut par ailleurs comprendre des interrupteurs commandables pour mettre le module photovoltaïque en circuit ouvert lors de la mesure de la tension $V_{oc}$ et en court-circuit lors de la mesure du courant Ise.

Le courant $I_{sc}$ est par exemple déterminé par mesure d'une tension aux bornes d'une résistance de shunt connectée aux bornes du module photovoltaïque. La résistance de shunt utilisée pour la mesure du courant de court-circuit $I_{sc}$ est de préférence relativement faible de façon à obtenir une mesure précise. A titre d'exemple, la résistance de shunt est telle que la chute de tension aux bornes de la résistance de shunt pendant la mesure du courant $I_{sc}$ ne dépasse pas 5 %, et soit de préférence de l'ordre de 1 % de la valeur de la tension de circuit ouvert $V_{oc}$ du module. Par exemple, pour un module photovoltaïque présentant une tension de circuit ouvert $V_{oc}$ de l'ordre de 7,5 V et un courant de court-circuit $I_{sc}$ de l'ordre de 0,75 A, une résistance de shunt de l'ordre de 0,1 ohms peut être prévue (conduisant à une chute de tension aux bornes de la résistance de shunt de l'ordre de 0,075 V soit 1 % de la tension $V_{oc}$).

Les coefficients du modèle multilinéaire (a, b, c dans le cas du modèle Math 9 ci-dessus ou a, b, c, d, e, f dans le cas du modèle Math 10 ci-dessus) peuvent être déterminés lors d'une phase de calibration, à la conception du système, par régression polynomiale multiple à partir de données mesurées empiriquement, et stockés dans un circuit mémoire du dispositif électronique de contrôle 110.

Pour déterminer les coefficients du modèle multilinéaire, le système peut être installé dans une chambre de calibration permettant de faire varier la température ambiante $T_a$ et l'irradiation. On vient alors balayer la plage des valeurs de température ambiante $T_a$ auxquelles le module est susceptible d'être soumis en conditions réelles d'utilisation. Pour chaque valeur de température ambiante $T_a$, on fait varier l'irradiation de façon à balayer la plage d'irradiations auxquelles le module est susceptible d'être soumis en conditions réelles d'utilisation. Pour chaque valeur d'irradiation et pour chaque valeur de température ambiante $T_a$, on mesure le courant de court-circuit $I_{sc}$ et la tension de circuit ouvert $V_{oc}$. Les coefficients du modèle sont ensuite déterminés par régression polynomiale multiple à partir des mesures réalisées.

Le procédé décrit ci-dessus permet d'estimer la température ambiante $T_a$ de façon précise, à partir d'une mesure du courant de court-circuit $I_{sc}$ du module et d'une mesure de la tension de circuit ouvert $V_{oc}$ du module, et ce par un calcul simple (formule d'algèbre linéaire) nécessitant des ressources calculatoires limitées et pouvant aisément être mis en oeuvre par un circuit électronique de contrôle embarqué du système intégrant le module photovoltaïque. On peut ainsi se passer d'une sonde de température extérieure dédiée à cette mesure.

Les modes de réalisation décrits ne se limitent pas à l'application susmentionnée à un système de type volet roulant motorisé. Plus généralement, la solution proposée peut s'appliquer à tout système comprenant un module photovoltaïque, et dans lequel on souhaite pouvoir mesurer la température ambiante au voisinage du module. Par exemple, le module photovoltaïque peut être installé sur un toit d'un bâtiment. La température ambiante $T_a$ au voisinage du module peut par exemple être exploitée par un dispositif électronique de contrôle pour piloter de façon automatique un système de chauffage ou de refroidissement du bâtiment, ou, simplement transmise à l'utilisateur via un dispositif d'affichage électronique, pour information.

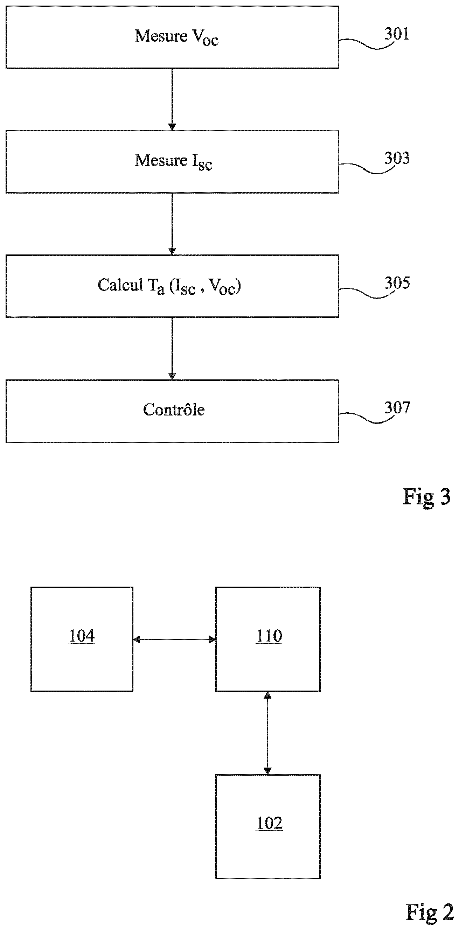

La figure 2 représente de façon schématique, sous forme de blocs, un exemple d'un système 100 de mesure de température selon un mode de réalisation. Le système 100 de la figure 2 peut être un système du type décrit en relation avec la figure 1, ou, plus généralement, tout système intégrant un module photovoltaïque 104. Le système 100 comprend un dispositif électronique de contrôle 110 relié au module photovoltaïque 104 et adapté à mesurer la tension de circuit ouvert $V_{oc}$ et le courant de court-circuit $I_{sc}$ du module. Le dispositif électronique de contrôle 110 est en outre relié à un élément commandable électriquement 102 du système. Le dispositif électronique 110 est configuré pour estimer la température ambiante $T_a$ au voisinage du module photovoltaïque 104 à partir de la tension $V_{oc}$ et du courant $I_{sc}$ en utilisant un modèle multilinéaire du type décrit ci-dessus, et commander en conséquence l'élément 102.

La figure 3 représente de façon schématique, sous forme de blocs, un exemple d'un procédé de mesure de température selon un mode de réalisation, mis en oeuvre par le dispositif électronique de contrôle 110 dans un système du type décrit en relation avec la figure 2.

Le procédé comprend une étape 301 de mesure de la tension de circuit ouvert $V_{oc}$ du module 104, suivie d'une étape 303 de mesure du courant de court-circuit $I_{sc}$ du module. En pratique, l'ordre des étapes 301 et 303 peut être inversé. De préférence, les étapes 301 de mesure de la tension de circuit ouvert $V_{oc}$ du module 104 et 303 de mesure du courant de court-circuit $I_{sc}$ du module sont mises en oeuvre dans un intervalle de temps rapproché, par exemple à moins d'une minute d'intervalle, afin de conserver des conditions sensiblement identiques de température et d'irradiation lors des deux mesures.

Le procédé comprend en outre, après les étapes 301 et 303, une étape 305 de calcul de la température ambiante $T_a$ au voisinage du module à partir de la tension $V_{oc}$ et du courant $I_{sc}$, au moyen d'un modèle multilinéaire tel que décrit ci-dessus.

Le procédé comprend en outre, après l'étape 305, une étape 307 de contrôle d'un élément 102 du système en tenant compte de la température $T_a$ calculée à l'étape 305.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de réalisation décrits ne se limitent pas aux exemples d'applications mentionnés explicitement ci-dessus, mais peuvent être adaptés à tout système intégrant un module photovoltaïque et dans lequel on peut tirer profit d'une mesure de température ambiante au voisinage du module photovoltaïque.

De plus, les modes de réalisation décrits ne se limitent pas à l'exemple particulier décrit ci-dessus dans lequel le calcul de température ambiante est mis en oeuvre par le dispositif électronique de contrôle du module. A titre de variante, le calcul peut être mis en oeuvre par un dispositif électronique de traitement externe distant, par exemple un ordinateur, par exemple lors d'une phase de post-traitement de données passées acquises par le dispositif électronique de contrôle du module.

**Revendications**

1. Procédé de détermination de la température ambiante extérieure $T_a$ dans un système comportant un module photovoltaïque (104), comprenant les étapes suivantes :

    a) mesurer le courant de court-circuit $I_{sc}$ et la tension de circuit ouvert $V_{oc}$ du module photovoltaïque (104) ;
    b) calculer la température ambiante extérieure $T_a$, au moyen d'un dispositif électronique de traitement (110), en fonction de la valeur du courant de court-circuit $I_{sc}$ et de la valeur de la tension de circuit ouvert $V_{oc}$ mesurées à l'étape a), au moyen d'un modèle mathématique polynomial unique à deux variables d'entrée.

2. Procédé selon la revendication 1, dans lequel le modèle polynomial utilisé à l'étape b) par le dispositif électronique de traitement (110) est un modèle d'ordre supérieur ou égal à 1 comprenant des coefficients fixes déterminés lors d'une phase préalable de calibration et stockés dans une mémoire du dispositif électronique de traitement.

3. Procédé selon la revendication 2, dans lequel le modèle polynomial utilisé à l'étape b) par le dispositif électronique de traitement (110) est un modèle multilinéaire d'ordre 1 défini par la relation suivante :

    [Math 9]

$$T_a(I_{sc}, V_{oc}) = a \times I_{sc} + b \times V_{oc} + c,$$

    où a, b et c sont les coefficients fixes du modèle, déterminés lors de la phase préalable de calibration et stockés dans ladite mémoire du dispositif électronique de traitement.

4. Procédé selon la revendication 2, dans lequel le modèle polynomial utilisé à l'étape b) par le dispositif électronique de traitement (110) est un modèle d'ordre 2 défini par la relation suivante :

    [Math 10]

$$T_a(I_{sc}, V_{oc}) = a \times I_{sc}^2 + b \times V_{oc}^2 + c \times I_{sc} \times V_{oc} + d \times I_{sc} + e \times V_{oc} + f,$$

    où a, b, c, d, e et f sont les coefficients fixes du modèle, déterminés lors de la phase préalable de calibration et stockés dans ladite mémoire du dispositif électronique de traitement.

5. Procédé selon la revendication 2, dans lequel le modèle polynomial utilisé à l'étape b) par le dispositif électronique de traitement (110) est un modèle d'ordre n supérieur à 2, défini par la relation suivante :

    [Math 11]

$$T_a(I_{sc}, V_{oc}) = \sum_{i=0}^{n} \sum_{j=0}^{n} a_{i,j} \times I_{sc}^{i} \times V_{oc}^{j},$$

    où i et j sont des entiers allant de 1 à n et les valeurs $a_{i,j}$ sont les coefficients fixes du modèle, déterminés lors de la phase préalable de calibration et stockés dans ladite mémoire du dispositif électronique de traitement.

**6.** Procédé selon l'une quelconque des revendications 1 à 5, dans lequel, à l'étape a), la valeur du courant de court-circuit $I_{sc}$ du module photovoltaïque est déterminée par mesure d'une tension aux bornes d'une résistance de shunt connectée aux bornes du module photovoltaïque (104).

**7.** Procédé selon la revendication 6, dans lequel la valeur de la résistance de shunt est telle que la tension aux bornes de la résistance de shunt lors de la mesure du courant de court-circuit $I_{sc}$ du module photovoltaïque (104) est inférieure à 5 % de la tension de circuit ouvert $V_{oc}$ du module photovoltaïque (104).

**8.** Procédé selon l'une quelconque des revendications 1 à 7, comportant en outre une étape de commande d'un élément commandable électriquement (102) du système en tenant compte de la valeur de la température ambiante $T_a$ calculée à l'étape b).

**9.** Système (100) comprenant un module photovoltaïque (104) et un dispositif électronique de traitement (110) configuré pour mettre en oeuvre un procédé selon l'une quelconque des revendications 1 à 8.

**10.** Système (100) selon la revendication 9, comprenant un dispositif d'occultation motorisé alimenté par le module photovoltaïque (104).

**Patentansprüche**

**1.** Verfahren zur Bestimmung der Außen-Umgebungstemperatur in einem System mit einem Photovoltaikmodul (104), das die folgenden Schritte aufweist:

a) Messen des Kurzschlussstroms $I_{sc}$ und der Leerlaufspannung $V_{oc}$ des Photovoltaikmoduls (104);
b) Berechnen der Außen-Umgebungstemperatur mittels einer elektronischen Verarbeitungsvorrichtung (110) als Funktion des Wertes des Kurzschlussstroms $I_{sc}$ und des Wertes der Leerlaufspannung $V_{oc}$ , die in Schritt a) gemessen wurden, mittels eines eindeutigen mathematischen Polynom-Modells mit zwei Eingangsvariablen.

**2.** Verfahren nach Anspruch 1, wobei das in Schritt b) von der elektronischen Verarbeitungsvorrichtung (110) verwendete Polynom-Modell ein Modell der Ordnung größer oder gleich 1 ist, das feste Koeffizienten aufweist, die während einer vorherigen Kalibrierungsphase bestimmt und in einem Speicher der elektronischen Verarbeitungsvorrichtung gespeichert wurden.

**3.** Verfahren nach Anspruch 2, wobei das in Schritt b) von der elektronischen Verarbeitungsvorrichtung (110) verwendete Polynom-Modell ein multilineares Modell der Ordnung 1 ist, das durch die folgende Beziehung definiert ist:

[Math 9]

$$T_a(I_{sc}, V_{oc}) = a \times I_{sc} + b \times V_{oc} + c,$$

wobei a, b und c die festen Koeffizienten des Modells sind, die während der vorherigen Kalibrierungsphase bestimmt und in dem Speicher der elektronischen Verarbeitungsvorrichtung gespeichert wurden.

**4.** Verfahren nach Anspruch 2, wobei das in Schritt b) von der elektronischen Verarbeitungsvorrichtung (110) verwendete Polynom-Modell ein Modell der Ordnung 2 ist, das durch die folgende Beziehung definiert ist:

[Math 10]

$$T_a(I_{sc}, V_{oc}) = a \times I_{sc}^2 + b \times V_{oc}^2 + c \times I_{sc} \times V_{oc} + d \times I_{sc} + e \times V_{oc} + f,$$

wobei a, b, c, d, e und f die festen Koeffizienten des Modells sind, die während der vorherigen Kalibrierungsphase bestimmt und in dem Speicher der elektronischen Verarbeitungsvorrichtung gespeichert wurden.

**5.** Verfahren nach Anspruch 2, wobei das in Schritt b) von der elektronischen Verarbeitungsvorrichtung (110) verwendete Polynom-Modell ein Modell der Ordnung n größer als 2 ist, das durch die folgende Beziehung definiert ist:

[Math 11]

$$T_a(I_{sc}, V_{oc}) = \sum_{i=0}^{n} \sum_{j=0}^{n} a_{i,j} \times I_{sc}^{\ i} \times V_{oc}^{\ j},$$

wobei i und j ganze Zahlen von 1 bis n sind und die Werte $a_{i,j}$ die festen Koeffizienten des Modells sind, die während der vorherigen Kalibrierungsphase bestimmt und in dem Speicher der elektronischen Verarbeitungsvorrichtung gespeichert wurden.

6. Verfahren nach einem der Ansprüche 1 bis 5, wobei in Schritt a) der Wert des Kurzschlussstroms $I_{sc}$ des Photovoltaikmoduls durch Messung einer Spannung an einem mit den Anschlüssen des Photovoltaikmoduls (104) verbundenen Shunt-Widerstand bestimmt wird.

7. Verfahren nach Anspruch 6, wobei der Wert des Shunt-Widerstands so ist, dass die Spannung über dem Shunt-Widerstand während der Messung des Kurzschlussstroms $I_{sc}$ des Photovoltaikmoduls (104) weniger als 5% der Leerlaufspannung $V_{oc}$ des Photovoltaikmoduls (104) beträgt.

8. Verfahren nach einem der Ansprüche 1 bis 7, das ferner einen Schritt des Steuerns eines elektrisch steuerbaren Elements (102) des Systems unter Berücksichtigung des in Schritt b) berechneten Wertes der Umgebungstemperatur aufweist.

9. System (100), das ein Photovoltaikmodul (104) und eine elektronische Verarbeitungsvorrichtung (110) aufweist, die konfiguriert ist zum Implementieren des Verfahrens nach einem der Ansprüche 1 bis 8.

10. System (100) nach Anspruch 9, das eine motorisierte Beschattungsvorrichtung aufweist, die durch das Photovoltaikmodul (104) angetrieben wird.


**Claims**

1. A method of determining the outdoor ambient temperature in a system comprising a photovoltaic module (104), comprising the following steps:

    a) measuring the short-circuit current $I_{sc}$ and the open-circuit voltage $V_{oc}$ of the photovoltaic module (104);
    b) calculating the outdoor ambient temperature $T_a$, by means of an electronic processing device (110), as a function of the value of the short-circuit current $I_{sc}$ and the value of the open-circuit voltage $V_{oc}$ measured in step a), by means of a unique polynomial mathematical model with two input variables.

2. The method according to claim 1, wherein the polynomial model used in step b) by the electronic processing device (110) is a model of order greater than or equal to 1 comprising fixed coefficients determined during a prior calibration phase and stored in a memory of the electronic processing device.

3. The method according to claim 2, wherein the polynomial model used in step b) by the electronic processing device (110) is a multilinear model of order 1 defined by the following relationship:

[Math 9]

$$T_a(I_{sc}, V_{oc}) = a \times I_{sc} + b \times V_{oc} + c,$$

where a, b and c are the fixed coefficients of the model, determined during the prior calibration phase and stored in said memory of the electronic processing device.

4. The method according to claim 2, wherein the polynomial model used in step b) by the electronic processing device (110) is a model of order 2 defined by the following relationship:

[Math 10]

$$T_a(I_{sc}, V_{oc}) = a \times I_{sc}^2 + b \times V_{oc}^2 + c \times I_{sc} \times V_{oc} + d \times I_{sc} + e \times V_{oc} + f,$$

where a, b, c, d, e and f are the fixed coefficients of the model, determined during the prior calibration phase and stored in said memory of the electronic processing device.

5. The method according to claim 2, wherein the polynomial model used in step b) by the electronic processing device (110) is a model of order n greater than 2, defined by the following relationship:

[Math 11]

$$T_a(I_{sc}, V_{oc}) = \sum_{i=0}^{n} \sum_{j=0}^{n} a_{i,j} \times I_{sc}^i \times V_{oc}^j,$$

where i and j are integers ranging from 1 to n and the values $a_{i,j}$ are the fixed coefficients of the model, determined during the prior calibration phase and stored in said memory of the electronic processing device.

6. The method according to any one of claims 1 to 5, wherein, in step a), the value of the short-circuit current $I_{sc}$ of the photovoltaic module is determined by measuring a voltage across a shunt resistor connected to the terminals of the photovoltaic module (104).

7. The method according to claim 6, wherein the value of the shunt resistor is such that the voltage across the shunt resistor during the measurement of the short-circuit current $I_{sc}$ of the photovoltaic module (104) is less than 5 % of the open-circuit voltage $V_{oc}$ of the photovoltaic module (104).

8. The method according to any one of claims 1 to 7, further comprising a step of controlling an electrically controllable element (102) of the system taking into account the value of the ambient temperature calculated in step b).

9. A system (100) comprising a photovoltaic module (104) and an electronic processing device (110) configured to implement a method according to any one of claims 1 to 8.

10. The system (100) according to claim 9, comprising a motorized shading device powered by the photovoltaic module (104) .

Fig 1

```
┌─────────────────────────────────────┐
│            Mesure V_OC               │────────  301
└─────────────────────────────────────┘
                   │
                   ▼
┌─────────────────────────────────────┐
│            Mesure I_SC               │────────  303
└─────────────────────────────────────┘
                   │
                   ▼
┌─────────────────────────────────────┐
│       Calcul T_a (I_SC , V_OC)       │────────  305
└─────────────────────────────────────┘
                   │
                   ▼
┌─────────────────────────────────────┐
│            Contrôle                  │────────  307
└─────────────────────────────────────┘
```

Fig 3

```
┌──────────┐              ┌──────────┐
│          │              │          │
│   104    │◄────────────►│   110    │
│          │              │          │
└──────────┘              └──────────┘
                               ▲
                               │
                               ▼
                          ┌──────────┐
                          │          │
                          │   102    │
                          │          │
                          └──────────┘
```

Fig 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102013219494 A1
- FR 2966943 A1
- FR 2966942 A1
- FR 3060634 A1